# FASCICULE DE BREVET EUROPEEN

(11) **EP 0 911 771 B1**
(45) Date de publication et mention de la délivrance du brevet: **03.04.2002**
(21) Numéro de dépôt: 98402553.6
(22) Date de dépôt: 14.10.1998
(51) Int. Cl.: G07F 7/00, G07G 1/00

(54) **Procédé de gestion d'articles, notamment pour magasin de grande surface et restauration collective et système pour la mise en oeuvre de ce procédé.**
Verfahren zur Warenverwaltung, insbesondere für Supermärkte und Gaststätten, und System zum Durchführen dieses Verfahrens
Method for goods management, in particular for supermarkets and institutional catering, and system for its operation

(30) Priorité: 15.10.1997 FR 9712917
(43) Date de publication de la demande: 28.04.1999
(73) Titulaire: Sodexho Alliance, 78180 Montigny Le Bretonneux (FR)
(72) Inventeur: Lafond, Pierre, 78000 ST Germain (FR); Cousin, Laurent, 75018 Paris (FR)
(74) Mandataire: Rinuy, Santarelli

(56) Documents cités:
- EP-A- 0 314 587
- WO-A-83/04327
- FR-A- 2 612 669
- GB-A- 2 080 001
- GB-A- 2 190 526
- US-A- 3 962 698
- US-A- 4 388 689
- US-A- 4 530 067
- US-A- 5 262 938
- US-A- 5 377 097

## Description

L'invention concerne un procédé de gestion d'articles tels que produits, objets ou plats notamment pour magasin de grande surface ou restaurant collectif, du type selon lequel les clients choisissent les articles qu'ils souhaitent acquérir et payent à une caisse le montant correspondant aux articles choisis, et un système pour la mise en oeuvre de ce procédé.

Parmi les différentes applications de tels procédés et systèmes figure la restauration rapide.

La restauration collective a bouleversé nos habitudes depuis une vingtaine d'années, que ce soit sur les lieux de travail avec les restaurants d'entreprise ou les restaurants « self-service » dans les villes et sur les haltes d'autoroutes. Ce mode de restauration a permis une baisse notable des coûts de production répercutés auprès des consommateurs (voir EP-A-0 314 587).

Ces dernières années, le concept de restauration collective a beaucoup évolué. Ainsi, pour rendre ce type de restauration plus attractif, la distribution linéaire des plats a été complétée par des îlots dédiés ou « scramble » proposant différentes spécialités culinaires.

Néanmoins, ce type de restauration présente de nombreux inconvénients pour les consommateurs. Ainsi, malgré les perfectionnements mentionnés ci-dessus, les consommateurs sont toujours soumis aux files d'attente, ils ont toujours à manipuler des plateaux lourdement chargés, et, surtout, tous les plats choisis se trouvant sur le plateau, le plat chaud (notamment un plat de viande accompagnée de légumes) s'est refroidi avant que le consommateur ait mangé son hors d'oeuvre. En outre, le suivi analytique des denrées est difficile, la gestion des stocks est peu fiable et la préparation des plats n'est pas optimisée.

L'invention a pour but de proposer un procédé et un système pour pallier les inconvénients qui viennent d'être énoncés à propos de la restauration collective, mais se rencontrent aussi de façon analogue dans le domaine des magasins de grande surface.

L'invention a pour objet un procédé de gestion d'articles tel que défini dans la revendication indépendante 1.

Pour résoudre spécifiquement le problème de la restauration collective, le procédé selon l'invention est caractérisé en ce que l'on adapte l'élément d'identification d'article et du client pour qu'ils fassent partie d'un dispositif de radio-localisation du client dans le restaurant pour permettre le service des articles sélectionnés, formés par des plats notamment des plats chauds, à la table où se trouve le client.

Le système pour la mise en oeuvre du procédé selon l'invention est caractérisé en ce que qu'il comporte un dispositif d'inscription d'un message d'identification d'un article sélectionné et un dispositif d'indication du lieu de remise au client de l'article sélectionné, qui comporte un élément d'identification de l'article sélectionné et du client, donné au client suite à la sélection d'un article, et un agencement fixe, ce dernier et l'élément d'identification comportant des moyens d'émission et de réception de signaux radioélectriques ou électromagnétiques.

Pour la mise en oeuvre du procédé pour restaurant collectif, le système de gestion automatisée des plats dans un restaurant collectif du type dans lequel les clients choisissent les plats qu'ils désirent consommer, les mettent sur un plateau et paient à une caisse le montant correspondant aux plats choisis ; comprend un moyen de reconnaissance visuelle des plats se trouvant sur le plateau du client, une unité de traitement pour déterminer la nature des plats visualisés par le moyen de reconnaissance visuelle et calculer la somme à payer par le client, une caisse automatique comportant une unité d'affichage pour afficher la somme à payer, et un dispositif d'entrée d'un moyen de paiement automatique tel qu'une carte à mémoire fournie par le client.

Les buts, objets et caractéristiques de l'invention apparaîtront plus clairement à la lecture de la description suivante en référence aux dessins dans lesquels :
La figure 1 est un bloc-diagramme d'un mode de réalisation préféré du système selon l'invention.
La figure 2 est une représentation schématique du panneau d'affichage de cuisine.
La figure 3 est une représentation schématique du panneau d'affiche d'hôtesse.
La figure 4 illustre un plateau d'hôtesse comportant un affichage de la localisation des clients ayant commandé les plats se trouvant sur le plateau.

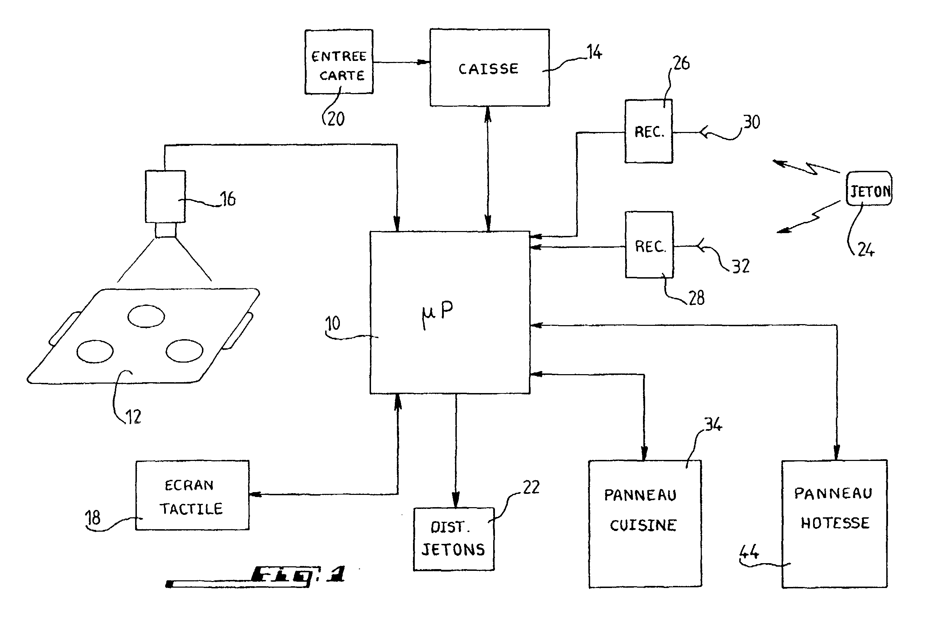

Comme illustré sur la figure 1, le système selon l'invention est sous le contrôle d'une unité de traitement telle qu'un microprocesseur 10, qui , comme on va le voir, permet une gestion automatisée du système.

Lorsque le client a choisi ses plats et qu'il les a posés sur un plateau 12, il doit se diriger vers une caisse 14 en passant près d'une caméra 16 ou tout autre moyen de reconnaissance visuelle, qui prend automatiquement une image des plats se trouvant sur le plateau 12. Cette caméra peut être du type classique CCD noir et blanc ou couleur. Pour ce faire, le client devra positionner son plateau sous la caméra 16. Pour éviter d'éventuelles tricheries, on peut faire en sorte que l'identification des plats se fasse pendant que le client est debout, devant ainsi tenir son plateau avec ses deux mains.

Néanmoins, des encoches peuvent être prévues pour lui faciliter la tâche et pour une bonne position du plateau par rapport à la caméra.

Le procédé de reconnaissance des plats est basé sur le principe de la correspondance de configurations ou "pattern matching". Dans ce procédé, l'image du plat est enregistrée par l'unité de traitement 10 à laquelle la caméra 16 est connectée, les formes principales sont isolées et une comparaison est alors effectuée avec des formes répertoriées dans une bibliothèque de cibles de référence enregistrée dans la mémoire de l'unité de traitement 10. La comparaison se fait en tenant compte du nombre de pixels de l'image enregistrée ayant les mêmes niveaux de gris (ou de couleur) que les cibles de la bibliothèque, souvent appelées signatures. La signature la plus proche est retenue. On doit noter que le nombre de signatures considérées, pour un service ou pour une catégorie, est relativement faible.

Une des caractéristiques de l'invention est le fait que le plat chaud (ou les plats chauds si le client en désire plusieurs) n'est pas placé sur son plateau. La sélection dudit plat chaud comportant généralement une viande ou poisson et des légumes, se fait grâce à un écran tactile 18 sur lequel sont affichées les différentes catégories de plats disponibles et leurs prix. La sélection s'effectue très rapidement par une pression sur la zone tactile concernée. Une fois que le client a choisi son plat, l'écran affiche le mode de cuisson désiré. Puis, le client peut choisir en option la quantité de garniture (par exemple de légumes) par des symboles du type +, ++, - ou --.

Dans la mesure où le temps de transit de chaque client devant l'écran tactile est forcément supérieur au temps nécessaire pour la visualisation des plats par la caméra 16, on peut prévoir la présence de deux (ou plus) écrans tactiles pour absorber toute la file des clients sans créer de file d'attente. Ainsi, avec un système disposant de deux écrans tactiles, après être passé sous la caméra, un client est dirigé vers un écran tactile à droite alors que le client suivant est dirigé vers l'écran tactile de gauche etc.

Une fois que la sélection du plat chaud a été effectuée, la caisse 14 munie d'une unité d'affichage (non montrée) affiche la somme à payer par le client qui lui a été communiquée par l'unité de traitement 10. Le client procède lui-même au paiment grâce à un moyen de paiement automatique tel qu'une carte à mémoire, carte dédiée et/ou carte bancaire au moyen du dispositif d'entrée de paiement 20. Le même dispositif 20 fournit un reçu au client après que celui-ci a effectué son paiement.

En même temps que l'unité de traitement 10 a communiqué la somme à payer à la caisse automatique 14, elle envoie une commande à un distributeur de jetons 22 lui demandant de délivrer un jeton au client. Un tel jeton est en fait un micro-émetteur de signaux électromagnétiques tels que les ondes radio disposant de son alimentation propre et d'un numéro d'identification. Au moment de la délivrance du jeton, l'unité de traitement 10 créé un lien de correspondance entre son numéro d'identification et le plat commandé, lien qui est enregistré en mémoire. On notera que le numéro d'identification du jeton est un code programmé lors de la fabrication du jeton par exemple un code en hexadécimal pouvant aller de 00.000.000 à FF FFF FFF (soit 2³² combinaisons), et qui est émis par ondes radio lorsque le jeton sera activé.

Lorsque le client a effectué sa sélection de plat chaud au moyen de l'écran tactile 18, les informations reçues par l'unité de traitement 10 ont été transmises à un panneau d'affichage 34 où elles s'affichent comme on va le voir pour permettre au cuisinier de gérer efficacement la préparation des plats.

Le client muni de son plateau sur lequel se trouvent les plats à consommer à l'exception du ou des plat(s) chaud(s), et de son jeton, s'installe à une table et peut commencer à consommer.

Lorsqu'il désire consommer le plat chaud qu'il a sélectionné précédemment, le client se sert alors du jeton 24 que le distributeur 22 lui a délivré. Le jeton 24 est pourvu d'un système de commande du type bouton-pression ou sensitif sur lequel le client agit de façon à activer le micro-émetteur contenu dans le jeton pour que ce dernier émette son numéro ou code d'identification.

Le cas échéant on peut prévoir que l'émission du code d'identification se fasse automatiquement 15 minutes après que le client a sélectionné son plat chaud.

Les ondes radio émises par le client permettent de repérer sa position dans la salle de restaurant. En effet, celle-ci est pourvue d'au moins deux récepteurs d'ondes radio 26 et 28 équipés respectivement d'antennes de réception goniométriques 30 et 32. Chaque antenne est munie de plusieurs branches directionnelles en réception a₁, a₂, ... aₙ.

Lorsque le jeton émet son code d'identification, la branche a₁ qui reçoit le signal le plus puissant correspond donc à la direction déterminant l'alignement le plus proche et est sélectionnée par l'unité de traitement 10 à laquelle les récepteurs 26 et 28 sont connectés. L'unité de traitement 10 peut ainsi déterminer la position du jeton comme étant à l'intersection des deux directions sélectionnées pour chacune des deux antennes. On doit noter qu'un troisième récepteur muni d'une antenne goniométrique peut avantageusement corréler l'indication des deux premiers et permettre ainsi d'obtenir un positionnement plus fin.

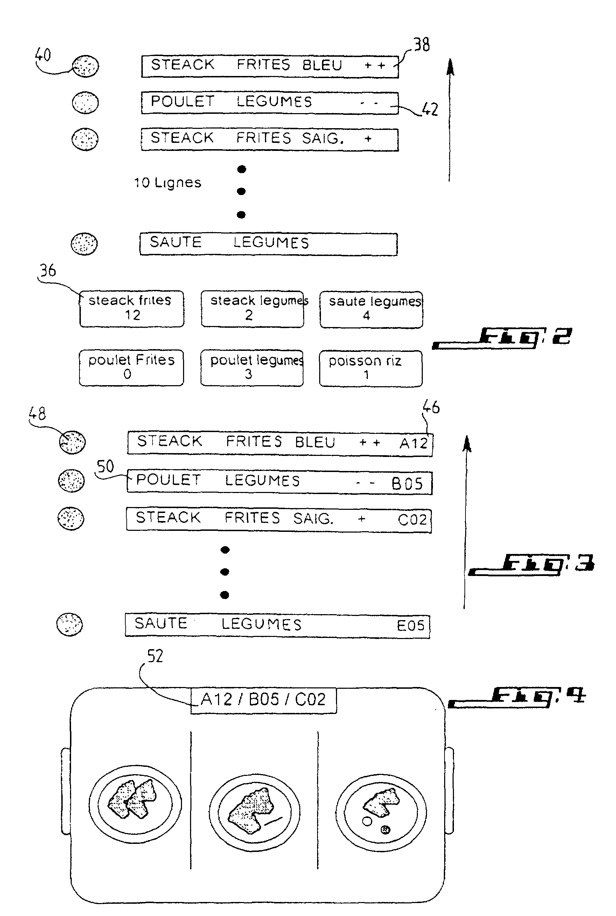

Comme mentionné précédemment, le panneau d'affichage 34 de cuisine permet une gestion efficace de l'élaboration des plats. En effet, le panneau 34 illustré sur la figure 2, comporte une partie basse et une partie haute. La partie basse comprend plusieurs zones d'affichage correspondant aux différentes catégories de plats chauds dans lesquelles s'affiche le nombre de plats actuellement en commande. Ainsi, la zone 36 correspond à la catégorie "steack-frites" et montre que douze plats de ce type ont été commandés. En supposant qu'un nouveau client sélectionne ce plat, le nombre affiché passe alors de douze à treize. Le cuisinier peut donc gérer l'élaboration des plats en tenant compte de la disponibilité des denrées impliquées dans cette élaboration. Par exemple, on peut prévoir que lorsque le nombre de "steack-frites" encore possibles est inférieur à un nombre donné, la zone passe d'un éclairage vert à un éclairage orange. Puis la zone passe en rouge s'il y a rupture ou que le cuisinier force la zone au rouge par simple pression auquel cas l'indication s'affiche sur l'unité d'affichage de la caisse automatique 14 informant les clients qu'il n'est plus possible de sélectionner "steack-frites".

La partie haute du panneau de cuisine 34 comporte un ensemble déterminé de zones dans lesquelles s'affichent les plats commandés par les clients lorsqu'ils activent leur jeton ; et cet affichage est décalé vers le haut au fur et à mesure que les plats sont élaborés par le cuisinier. Ainsi, la zone d'affichage 38 indique que le plat demandé le plus ancien, et donc à faire le premier, est un "steack-frites bleu" et "++" indique qu'il faut une portion maximale de frites.

Dès que le cuisinier a élaboré le plat se trouvant dans la zone d'affichage du panneau de cuisine, il appuie sur un bouton d'annulation correspondant à la zone. Ainsi, dans le cas de la zone 38, il appuie sur le bouton 40. Cette action fait disparaître l'indication "steack-frites bleu" de la zone qui est remplacée par l'indication "poulet-légumes" qui se trouvait auparavant dans la zone 42, et ainsi de suite, l'indication d'une zone s'affichant dans la zone immédiatement supérieure. On doit noter que le nombre de plats en attente indiqué dans les zones d'affichage de la partie basse est diminué de "1" chaque fois qu'un plat de cette catégorie passe dans les zones d'affichage de la partie haute.

Lorsque le cuisinier appuie sur un bouton d'annulation parce que le plat a été élaboré, une information est envoyée à un panneau d'affichage d'hôtesse 44 dont le contenu est illustré sur la figure 3. Ce panneau contient plusieurs zones d'affichage placées dans un ordre vertical. Au fur et à mesure que les plats sont prêts et que le cuisinier les fait disparaître de son panneau en appuyant sur les boutons d'annulation, les informations sont prises en compte par le panneau d'hôtesse 44.

Dans l'exemple illustré sur la figure 3, l'une des hôtesses dont le travail consiste à servir les clients en salle sait qu'elle doit d'abord servir un "steack-frites bleu ++" qui se trouve dans la zone d'affichage la plus haute. En plus des indications sur le plat à servir, la zone d'affichage indique la position du client qui a commandé, par exemple A12. L'hôtesse va donc placer sur son plateau de service un "steack-frites bleu ++" pour le porter au client. Après avoir mis le plat sur son plateau, l'hôtesse appuie sur le bouton d'annulation 48 correspondant au plat qu'elle a pris. L'indication correspondant au plat disparaît de la zone d'affichage 46 et est remplacée par l'indication "poulet-légumes - B05" se trouvant dans la zone d'affichage immédiatement inférieure. On doit noter que chaque hôtesse peut transporter plusieurs plats sur un seul plateau.

Dans une variante du mode de réalisation préféré de l'invention, on peut prévoir un plateau de service d'hôtesse muni d'un afficheur indiquant la position du client comme illustré sur la figure 4. Dans ce cas, les plateaux d'hôtesse sont placés dans un emplacement réservé à proximité du panneau d'hôtesse, de manière à ce que l'afficheur reçoive les positions des clients à servir par liaison infrarouge à partir du panneau d'hôtesse 44. Ainsi, dans l'exemple illustré sur la figure 4, le plateau peut contenir trois plats pour trois clients. Il s'agit donc des trois premiers plats à servir affichés sur le panneau d'hôtesse, soit aux positions A12, B05 et C02.

De nombreuses variantes peuvent être apportées au système de gestion automatisée qui vient d'être décrit. Ainsi, il est possible de prévoir des jetons pouvant avoir différentes couleurs correspondant au dernier chiffre de leur code d'identification. Lorsqu'un jeton de couleur donnée est délivré à un client, l'unité de traitement qui connaît le code d'identification du jeton connaît également sa couleur. Elle peut donc fournir cette information aux panneaux d'affichage et en particulier au panneau d'hôtesse pour que ce dernier l'affiche. Ainsi, l'hôtesse munie de cette information peut retrouver plus facilement le client dont la position peut être confondue avec celle d'un autre client mais ayant un jeton de couleur différente.

Il est à noter que l'invention n'est pas limitée à l'utilisation décrite dans la restauration collective. En effet, l'invention est utilisable dans tous les cas de vente et de distribution simultanés de produits ou objets de série immédiatement disponibles et de produits ou objets qui ne le sont pas et doivent être préparés ou emballés individuellement.

Par exemple dans des magasins de grande surface, certains articles tels que produits ou objets sont présents dans les rayons et peuvent donc être pris immédiatement par les clients, tandis que d'autres articles achetés seulement rarement sont stockés ailleurs, par exemple dans une zone de stockage spécifique, et dont seulement un exemplaire est exposé ou affiché pour que les clients puissent en prendre connaissance. Comme dans le cas des plats chauds dans la restauration collective, un client qui souhaite acheter un de ces articles inscrit son choix sur un écran tactile ou autre moyen de commande. Pendant que le client continue ses courses dans cette zone du magasin ou, après avoir fait le paiement de l'ensemble de ses achats, reste encore dans le magasin, avec le jeton sur lui, qu'il a reçu à la caisse, par exemple pour d'autres achats dans d'autres zones ou tout simplement pour flâner dans le magasin, l'article sélectionné sur l'écran tactile est préparé, emballé ou cherché dans la zone de stockage. Lorsque l'article est prêt pour être remis au client, on signale à celui-ci la disponibilité de l'article. A cette fin, le jeton pourrait aussi comporter un récepteur destiné à capter le signal indicateur de la disponibilité de l'article. Le client pourrait alors émettre un signal d'indication du lieu où il se trouve pour que l'article lui soit apporté ou indiquer par un signal le lieu où il souhaite réceptionner l'article.

On comprend aisément qu'un tel système permet une gestion meilleure et moins onéreuse des articles dans un magasin notamment mais non exclusivement de grande surface et réduit l'espace de stockage nécessaire dans l'espace public du magasin.

## Revendications

1. Procédé de gestion d'articles tels que produits, objets ou plats notamment pour magasin de grande surface ou restaurant collectif, du type selon lequel les clients choisissent les articles qu'ils souhaitent acquérir et payent à une caisse le montant correspondant aux articles choisis, **caractérisé en ce que** les clients prennent directement des articles immédiatement disponibles, sélectionnent les articles non immédiatement disponibles sur un dispositif (18) d'inscription d'un message d'identification de l'article sélectionné, un lien de correspondance étant créé entre ledit message et un élément d'identfication (24) de l'article sélectionné et du client qu'on remet au client ayant fait une inscription et **en ce que** cet élément d'identification (24) est utilisé pour la remise au client de l'article sélectionné au lieu où il se trouve ou qui est indiqué par celui-ci, à l'aide de l'élément d'identification.

2. Procédé selon la revendication 1 pour restaurant collectif, selon lequel les clients choisissent les plats qu'ils désirent consommer, les mettent sur un plateau et payent à une caisse le montant correspondant au plat choisi avant de s'installer à une table, **caractérisé en ce que** l'on adapte l'élément d'identification d'article et du client pour qu'ils fassent partie d'un dispositif de radio-localisation du client dans le restaurant pour permettre le service des articles sélectionnés, formés par des plats notamment des plats chauds, à la table où se trouve le client.

3. Système pour la mise en oeuvre du procédé de gestion selon l'une des revendications 1 ou 2, **caractérisé en ce qu'**il comporte un dispositif (18) d'inscription d'un message d'identification d'un article sélectionné et un dispositif d'indication du lieu de remise au client de l'article sélectionné, qui comporte un élément d'identification (24) de l'article sélectionné et du client, donné au client suite à la sélection d'un article, et un agencement fixe (26,28), ce dernier et l'élément d'identification comportant des moyens d'émission et de réception de signaux radioélectriques ou électromagnétiques.

4. Système selon la revendication 3, pour la mise en oeuvre du procédé selon la revendication 2, **caractérisé en ce qu'**il comprend un moyen de reconnaissance visuelle (16) des plats se trouvant sur le plateau (12) du client, une unité de traitement (10) pour déterminer la nature des plats visualisés par ledit moyen de reconnaissance visuelle et calculer la somme à payer par le client et une caisse automatique (14) comportant une unité d'affichage pour afficher ladite somme à payer et un dispositif d'entrée (20) d'un moyen de paiement automatique fourni par le client.

5. Système selon la revendication 4, **caractérisé en ce qu'**il comprend en outre un écran tactile (18) utilisé par le client pour sélectionner au moins un des plats choisis, notamment un plat chaud, et un moyen (22) de remise au client d'un élément d'identification (24) du plat sélectionné par ledit écran tactile, ledit élément d'identification étant utilisé par le client pour se faire servir ledit plat.

6. Système selon la revendication 5, **caractérisé en ce que** ledit élément d'identification est un jeton (24) remis au client par un distributeur de jetons (22) sous la commande de ladite unité de traitement (10) après que le plat a été sélectionné par le client sur ledit écran tactile (18).

7. Système selon la revendication 6 **caractérisé en ce que** ledit jeton (24) est un micro-émetteur de signaux électromagnétiques pouvant émettre un code d'identification au moyen des dits signaux lorsqu'il est activé, la salle dans laquelle s'installe le client pour consommer étant pourvue de moyens de réception (26, 28) des dits signaux électromagnétiques émis par ledit micro-émetteur de manière à ce que, lorsque ledit micro-émetteur est activé par le client, ledit code d'identification transporté par lesdits signaux émectromagnétiques et reçu par lesdits moyens de réception permet de déterminer la position du client dans la salle et de lui apporter ledit plat sélectionné.

8. Système selon la revendication 7, **caractérisé en ce que** lesdits signaux électromagnétiques sont des ondes radio.

9. Système selon la revendication 7 ou 8, **caractérisé en ce que** lesdits moyens de réception de signaux électromagnétiques sont constitués d'au moins deux récepteurs (26 et 28) disposant d'antennes goniométriques (30 et 32) permettant de détecter la position exacte du client lorsque ce dernier a activé son jeton (24).

10. Système selon l'une des revendications 6 à 9, **caractérisé en ce qu'**il comprend en outre un panneau d'affichage en cuisine (34) sur lequel s'affiche les commandes des plats sélectionnés par les clients à l'aide dudit écran tactile (18).

11. Système selon la revendication 10, **caractérisé en ce que** ledit panneau d'affichage de cuisine (34) comprend une première partie (36) affichant les commandes des clients pour chaque catégorie de plats sélectionnés et une seconde partie (38, 42) affichant la séquence des plats sélectionnés à servir en salle par ordre d'ancienneté de commande après que les clients correspondants ont activé leurs jetons (24).

12. Système selon la revendication 11, **caractérisé en ce que** ladite seconde partie dudit panneau d'affichage (34) comporte une zone d'affichage (38 ou 42) pour chacun des plats à servir en salle et un bouton (40) associé à chacune des zones d'affichage pour effacer le contenu de la zone lorsque le plat correspondant a été préparé, les contenus des autres zones d'affichage étant alors tous décalés d'une zone lorsque ledit bouton a été activé.

13. Système selon la revendication 12, **caractérisé en ce qu'**il comprend en outre un panneau d'affichage d'hôtesse (44) comprenant des zones d'affichage (46, 50) pour chacun des plats à servir en salle par ordre d'ancienneté de commande, lesdites zones d'affichage affichant la nature du plat ainsi que la positon en salle du client qui a passé la commande de manière à ce que l'hôtesse puisse savoir quels plats préparés elle doit servir en salle et la position des clients correspondants.

14. Système selon la revendication 13, **caractérisé en ce qu'**un bouton d'annulation (48) est associé à chaque zone d'affichage (46 ou 50) ; ledit bouton d'annulation étant activé par l'hôtesse lorsqu'elle va servir le plat correspondant de manière à ce que le contenu de ladite zone d'affichage soit effacé et que les contenus des autres zones d'affichage soient tous décalés d'une zone.

15. Système selon la revendication 13 ou 14, **caractérisé en ce que** l'hôtesse dispose d'un plateau d'hôtesse comportant un afficheur (52) pour afficher les positions des clients à servir en premier et dont les plats sélectionnés peuvent être placés sur ledit plateau d'hôtesse.

16. Système selon la revendication 15, **caractérisé en ce que** les positions des clients à servir sont transmises à l'afficheur (52) dudit plateau d'hôtesse par signaux infrarouges par ledit panneau d'affichage d'hôtesse (44).

## Patentansprüche

1. Verfahren zur Verwaltung von Waren, wie beispielsweise Produkten, Objekten oder Gerichten, insbesondere für Supermärkte oder Selbstbedienungsresataurants der Art, bei der die Kunden die Artikel, die sie zu kaufen wünschen, auswählen und an einer Kasse den den ausgewählten Artikeln entsprechenden Preis bezahlen, **dadurch gekennzeichnet, dass** die Kunden direkt unmittelbar verfügbare Artikel nehmen, die nicht unmittelbar verfügbaren Artikel auf einer Einrichtung (18) zum Eintragen einer Identifizierungsnachricht des ausgewählten Artikels auswählen, wobei eine Zuordnung zwischen der Nachricht und einem Identifizierungselement (24) des ausgewählten Artikels und des Kunden, das man an den Kunden, der eine Eintragung gemacht hat, zurückgibt, geschaffen wird, und dass dieses Indentifizierungselement (24) für die Übergabe des ausgewählten Artikels an den Kunden an der Stelle, an der er sich befindet oder die von ihm mit Hilfe des Indentifikationselements angezeigt wird, verwendet wird.

2. Verfahren nach Anspruch 1 für ein Selbstbedienungsrestaurant, gemäß dem die Kunden die Gerichte, die sich zu sich zu nehmen wünschen, auswählen, sie auf ein Tablett legen und an einer Kasse den dem ausgewählten Gericht entsprechenden Preis zahlen, bevor sie sich an einen Tisch setzen, **dadurch gekennzeichnet, dass** das Indentifizierungselement des Artikels und des Kunden so ausgelegt wird, dass sie Teil einer Vorrichtung zur Fernlokalisierung des Kunden im Restaurant sind, um die Bedienung mit den ausgewählten Artikeln, welche von Gerichten, insbesondere von heißen Gerichten, gebildet worden, an den Tisch, an dem sich der Kunde befindet, zu ermöglichen.

3. System zum Einsatz der Verwaltung nach einem der Ansprüche 1 oder 2, **dadurch gekennzeichnet, dass** es eine Einrichtung (18) zum Eintragen einer Identifizierungsnachricht für einen ausgewählten Artikel und eine Einrichtung zur Anzeige des Ortes der Übergabe des ausgewählten Artikels an den Kunden, die ein Identifizierungselement (24) des ausgewählten Artikels und des Kunden umfaßt, das dem Kunden im Anschluß an die Auswahl eines Artikels gegeben wird, und eine feste Einrichtung (26, 28) aufweist, wobei diese letztere und das Identifizierungselement Mittel zum Aussenden und Empfangen von radioelektrischen oder elektromagnetischen Signalen aufweisen.

4. System nach Anspruch 3 für den Einsatz des Verfahrens nach Anspruch 2, **dadurch gekennzeichnet, dass** es ein Mittel (16) zur visuellen Erkennung der Gerichte, die sich auf dem Tablett (12) des Kunden befinden, eine Verarbeitungseinrichtung (10), um die Art der von dem Mittel zur visuellen Erkennung sichtbar gemachten Gerichte zu bestimmen und um die vom Kunden zu zahlende Summe zu errechnen, und eine automatische Kasse (14) aufweist, die eine Anzeigeeinrichtung zum Anzeigen der zu zahlenden Summe und eine Aufnahmevorrichtung (20) für ein vom Kunden überreichtes automatisches Zahlungsmittel aufweist.

5. System nach Anspruch 4, **dadurch gekennzeichnet, dass** es außerdem einen berührungssensitiven Bildschirm (18), der vom Kunden verwendet wird, um mindestens eines der gewählten Gerichte auszuwählen, insbesondere ein heißes Gericht, und ein Mittel (22) zur Übergabe eines Indentifizierungselements (24) des über den berührungssensitiven Bildschirm ausgewählten Gerichts an den Kunden aufweist, wobei das Identifizierungselement vom Kunden dazu verwendet wird, sich das Gericht servieren zu lassen.

6. System nach Anspruch 5, **dadurch gekennzeichnet, dass** das Identifizierungselement eine Münze (24) ist, die an den Kunden von einem Münzspender (22) unter der Steuerung der Verarbeitungseinrichtung (10) ausgegeben wird, nachdem das Gericht vom Kunden auf dem berührungssensitiven Bildschirm (18) ausgewählt wurde.

7. System nach Anspruch 6, **dadurch gekennzeichnet, dass** die Münze (24) ein Mikrosender elektromagnetischer Signale ist, der einen Identifizierungscode mittels der Signale aussenden kann, wenn er aktiviert ist, wobei der Saal, in dem sich der Kunde zum Konsumieren niederläßt, mit Empfangsmitteln (26, 28) für die elektromagnetischen Signale, die von dem Mikrosender ausgesendet werden, ausgestattet ist, so dass, wenn der Mikrosender vom Kunden aktiviert wird, der Identifizierungscode, der von den elektromagnetischen Signalen transportiert und von den Empfangsmitteln empfangen wird, es ermöglicht, die Position des Kunden im Saal zu bestimmen und ihm das ausgewählte Gericht zu bringen.

8. System nach Anspuch 7, **dadurch gekennzeichnet, dass** die elektromagnetischen Signale Radiowellen sind.

9. System nach Anspuch 7 oder 8, **dadurch gekennzeichnet, dass** die Empfangsmittel für die elektromagnetischen Signale von mindestens zwei Empfängern (26 und 28) gebildet sind, die über Goniometrieantennen (30 und 32) verfügen, die es ermöglichen, die genaue Position des Kunden zu bestimmen, wenn dieser seine Münze (24) aktiviert.

10. System nach einem der Ansprüche 6 bis 9, **dadurch gekennzeichnet, dass** es außerdem eine Küchenanzeigetafel (34) aufweist, auf der die Bestellungen der von den Kunden mit Hilfe des berührungssensitiven Bildschirms (18) ausgewählten Gerichte angezeigt werden.

11. System nach Anspruch 10, **dadurch gekennzeichnet, dass** die Küchenanzeigetafel (34) einen ersten Teil (36) aufweist, der die Bestellungen der Kunden für jede Kategorie von ausgwählten Gerichten anzeigt, und einen zweiten Teil (38, 42), der die Abfolge der ausgwählten Gerichte, die im Saal gemäß Rangfolge der Bestellung zu servieren sind, nachdem die entsprechenden Kunden ihre Münzen (24) aktiviert haben, anzeigt.

12. System nach Anspruch 11, **dadurch gekennzeichnet, dass** der zweite Teil der Anzeigetafel (34) eine Anzeigezone (38 oder 42) für jedes der im Saal zu servierenden Gerichte und einen Knopf (40) aufweist, der jeder der Anzeigezonen zugeordnet ist, um den Inhalt der Zone auszulöschen, wenn das entsprechende Gericht zubereitet worden ist, wobei alle Inhalte der anderen Anzeigezonen dann um eine Zone verschoben werden, wenn der Knopf aktiviert worden ist.

13. System nach Anspruch 12, **dadurch gekennzeichnet, dass** es außerdem eine Anzeigetafel (44) für Bedienungen aufweist, das Anzeigezonen (46, 50) für jedes der im Saal gemäß Bestellungsrangfolge zu servierenden Gerichte umfaßt, wobei die Anzeigezonen die Art des Gerichts sowie die Position des Kunden, der die Bestellung aufgegeben hat, im Saal anzeigt, so dass die Bedienung wissen kann, welche zubereiteten Gerichte sie im Saal servieren soll und die Position der entsprechenden Kunden.

14. System nach Anspruch 13, **dadurch gekennzeichnet, dass** ein Auslöschknopf (48) jeder Anzeigezone (46 oder 50) zugeordnet ist, wobei der Auslöschknopf von der Bedienung aktiviert wird, wenn sie das entsprechende Gericht serviert, so dass der Inhalt der Anzeigetafel ausgelöscht wird und die Inhalte der anderen Anzeigezonen um eine Zone verschoben werden.

15. System nach Anspruch 13 oder 14, **dadurch gekennzeichnet, dass** die Bedienung über ein Bedienungstablett verfügt, das eine Anzeige (52) zum Anzeigen der Positionen der zuerst zu bedienenden Kunden aufweist, wobei die ausgewählten Gerichte auf dem Tablett der Bedienung angeordnet werden können.

16. System nach Anspruch 15, **dadurch gekennzeichnet, dass** die Positionen der zu bedienenden Kunden durch Infrarotsignale über die Anzeigetafel (44) für die Bedienung an die Anzeige (52) des Bedienungstabletts übertragen werden.

## Claims

1. Method of manufacturing articles such as products, articles or dishes, notably for supermarkets or fast-food restaurants, of the type according to which the customers choose the articles which they wish to purchase and pay at a till the amount corresponding to the articles chosen, **characterised in that** the customers directly take immediately any available articles, selecting the articles not immediately available on a device (18) for entering a message identifying the article selected, a matching link being created between the said message and a element (24) identifying the selected article and the customer which is handed to the customer who has made an entry and **in that** this identification element (24) is used for handing to the customer the selected article at the place where he is situated or which is indicated by him, by means of the identification element.

2. Method according to Claim 1 for fast-food restaurants, according to which the customers choose the dishes which they wish to consume, putting them on a tray and paying at a till the amount corresponding to the chosen dish before sitting down at a table, **characterised in that** the article and customer identification elements are adapted so that they form part of a device for radio location of the customer in the restaurant to enable the selected articles to be served, consisting of dishes, notably hot dishes, at the table where the customer is situated.

3. System for implementing the management method according to one of Claims 1 or 2, **characterised in that** it includes a device (18) for entering a message identifying a selected article and a device indicating the place for handing the selected article over to the customer, which includes an element (24) for identifying the article selected and the customer, given to the customer following the selection of an article, and a fixed arrangement (26, 28), the latter and the identification element including means of transmitting and receiving radio or electromagnetic signals.

4. System according to Claim 3, for implementing the method according to Claim 2, **characterised in that** it comprises a means of visual recognition (16) of the dishes situated on the tray (12) of the customer, a processing unit (10) for determining the nature of the dishes displayed by the said visual recognition means and calculating the sum to be paid by the customer and an automatic till (14) including a display unit for displaying the said sum to be paid and a device (20) for inputting an automatic payment means supplied by the customer.

5. System according to Claim 4, **characterised in that** it also comprises a touch screen (18) used by the customer for selecting at least one of the chosen dishes, notably a hot dish, and a means (22) of handing to the customer an element (24) identifying the dish selected by the said touch screen, the said identification element being used by the customer in order to be served the said dish.

6. System according to Claim 5, **characterised in that** the said identification element is a token (24) handed to the customer by a token dispenser (22) under the control of the said processing unit (10) after the dish has been selected by the customer on the said touch screen (18).

7. System according to Claim 6, **characterised in that** the said token (24) is an electromagnetic signal microtransmitter able to transmit an identification code by means of the said signals when it is activated, the dining area in which the client sits in order to eat being provided with means (26, 28) of receiving the said electromagnetic signals transmitted by the said microtransmitter so that, when the said microtransmitter is activated by the customer, the said identification code transported by the said electromagnetic signals and received by the said reception means makes it possible to determine the position of the customer in the dining area and to bring him the said selected dish.

8. System according to Claim 7, **characterised in that** the said electromagnetic signals are radio waves.

9. System according to Claim 7 or 8, **characterised in that** the said electromagnetic signal reception means consist of at least two receivers (26 and 28) having direction-finder antennae (30 and 32) for detecting the exact position of the customer when the latter has activated his token (24).

10. System according to one of Claims 6 to 9, **characterised in that** it also comprises a display panel in the kitchen (34) on which there are displayed the orders for the dishes selected by the customers by means of the said touch screen (18).

11. System according to Claim 10, **characterised in that** the said kitchen display panel (13) comprises a first part (36) displaying the orders of the customers for each category of dish selected and a second part (38, 42) displaying the sequence of dishes selected to be served in the dining area in order according to the time the order was placed after the corresponding customers have activated their tokens (24).

12. System according to Claim 11, **characterised in that** the said second part of the display panel (34) has a display zone (38 or 42) for each of the dishes to be served in the dining area and a button (40) associated with each of the display zones in order to erase the content of the zone when the corresponding dish has been prepared, the contents of the other display zones then all being shifted by one zone when the said button has been activated.

13. System according to Claim 12, **characterised in that** it also comprises a waitress display panel (44) comprising display zones (46, 50) for each of the dishes to be served in the dining area in order of time at which the order was placed, the said display zones displaying the nature of the dish and the position in the dining area of the customer who has placed the order so that the waitress can know which prepared dishes she is to serve in the dining area and the position of the corresponding customers.

14. System according to Claim 13, **characterised in that** a cancellation button (48) is associated with each display zone (46 or 50); the said cancellation button being activated by the waitress when she is going to serve the corresponding dish so that the content of the said display zone is erased and the contents of the other display zones are all shifted by one zone.

15. System according to Claim 13 or 14, **characterised in that** the waitress has a waitress tray including a display (52) for displaying the positions of the customers to be served first and whose selected dishes can be placed on the said waitress tray.

16. System according to Claim 15, **characterised in that** the positions of the customers to be served are transmitted to the display (52) of the said waitress tray by infrared signals by the said waitress display panel (44).
